# EUROPEAN PATENT APPLICATION

(11) **EP 1 444 896 A2**
(43) Date of publication of application: **11.08.2004**
(21) Application number: 04002697.3
(22) Date of filing: 06.02.2004
(51) Int. Cl.: A21B 1/00, A21B 7/00, A21D 8/00

(54) **Automatic breadmaking apparatus and method of making bread**

(30) Priority: 07.02.2003 JP 2003031429; 26.09.2003 JP 2003335008
(71) Applicant: Sanyo Electric Co., Ltd., Moriguchi-shi, Osaka 570-8677 (JP); Sanyo Home Appliance Tottori Co.Ltd., Tottori-shi, Tottori 680-8634 (JP); NIIGATAGURUME CO.,LTD., Niigata-shi, Niigata 950-0912 (JP)
(72) Inventor: Shirai, Yoshinari, Osaka-shi Osaka 545-0053 (JP); Shiono, Shunji, Habikino-shi Osaka 583-0855 (JP)
(74) Representative: Grünecker, Kinkeldey, Stockmair & Schwanhäusser Anwaltssozietät

(57) **Abstract**

An automatic breadmaking apparatus adapted to automatically carry out breadmaking operations from kneading to baking includes a housing, a container receivable in the housing into which breadmaking ingredients are fed, a stirrer for stirring the breadmaking ingredients fed in the container, a stirring control section for controlling an operation of the stirrer, a temperature control section for controlling temperature in the container, and a central control section for controlling the stirring control section and the temperature control section in accordance with a breadmaking sequence using rice flour.

## Description

### BACKGROUND OF THE INVENTION

### 1. Field of the Invention

The present invention relates to an automatic breadmaking apparatus and a method of making bread, particularly to an automatic apparatus and a method for making bread with use of rice flour as a main ingredient.

### 2. Description of the Background Art

Recently in Japan, with a growing campaign for improving the self-sufficient rate in food and with decreased rice consumption owing to westernized diet and the like, new measures for raising rice consumption have been encouraged. In the circumstances, in order to extend the range of uses of rice flour over existing ones such as rice dumplings, various techniques have been proposed for using rice flour as a wheat flour substitute (see Japanese Examined Patent Publication No. 1995-100002 and Japanese Patent Publication No. 3076552). Bread baked using rice flour produced by the techniques has been expected to grow in popularity among consumers because it has a higher water content and creates the sensation of fullness in a smaller amount than bread baked using wheat flour.

However, rice flour produced according to the above-mentioned techniques sometimes turns out to be defective when cooked in the same manner as wheat flour is cooked. For example, in cases where the rice flour is used for baking bread in place of wheat flour, gluten does not form well and the bread baked from the rice flour does not rise satisfactorily if the rice flour is cooked as wheat flour is.

### SUMMARY OF THE INVENTION

The present invention has been made in view of this current situation, and an object of the invention is to provide an automatic breadmaking apparatus that enables bread to be adequately baked even using rice flour as the main ingredient.

In addition, rice flour has a higher moisture content than wheat flour, but, as time passes, the rice flour tends to release moisture that it has absorbed. For this reason, if making bread requires a long time, bread materials are baked in the released moisture. In other words, the bread is baked from the materials in a porridge state. As a result, the baked bread is not tasty. Therefore, another object of the invention is to provide an automatic breadmaking apparatus that enables bread to be made in minimal time.

In one aspect, the present invention provides an automatic breadmaking apparatus adapted to automatically carry out breadmaking operations from kneading to baking, the automatic breadmaking apparatus comprising a housing, a container receivable in the housing into which breadmaking ingredients are fed, a stirrer for stirring the breadmaking ingredients fed in the container, a stirring control section for controlling an operation of the stirrer, a temperature control section for controlling temperature in the container and a central control section for controlling the stirring control section and the temperature control section in accordance with a breadmaking sequence using rice flour.

According to this aspect, when the bread making ingredients are fed in the container, the stirring control section and the temperature control section are so controlled that the breadmaking sequence of baking bread from rice flour as a main ingredient is carried out.

With this constitution, bread can be adequately baked with use of rice flour as the main ingredient.

In another aspect, the present invention provides an automatic breadmaking apparatus adapted to automatically carry out breadmaking operations from kneading to baking, the automatic breadmaking apparatus comprising a housing, a container receivable in the housing into which the breadmaking ingredients are fed, a stirrer for stirring the breadmaking ingredients fed in the container, a stirring control section for controlling an operation of the stirrer, a temperature control section for controlling temperature in the container and a central control section for controlling the stirring control section and the temperature control section, thereby forming dough by kneading the breadmaking ingredients, fermenting the formed dough and baking the fermented dough, sequentially in the container.

According to this aspect, the breadmaking ingredients are baked after kneaded into the dough without being subjected to punching or the like which may cause damage to the dough.

With this constitution, even if the rice flour does not contain gluten, the viscosity of the dough can be prevented from declining owing to damage to the dough and the bread can swell sufficiently during baking. Thus, if the automatic breadmaking apparatus is used for baking bread using rice flour as the main ingredient, the bread can be adequately baked.

In the automatic breadmaking apparatus of the present invention, the central control section may control the stirring control section and the temperature control section so that a primary rise of the breadmaking ingredients takes place in the container before the dough is formed by kneading.

With this constitution, even if the bread is made using rice flour, which is less easy to hydrate than wheat flour, the primary rise provides enough time for the rice flour contained in the breadmaking ingredients to hydrate. Thus, if the automatic breadmaking apparatus is used for baking bread using rice flour as the main ingredient, the bread can be adequately baked.

In the automatic breadmaking apparatus of the present invention, the central control section may control the stirring control section so that the breadmaking ingredients are mixed before the primary rise.

With this constitution, the hydration of the rice flour during the primary rise can be promoted with more reliability. Also the mixing of the breadmaking ingredients before the primary rise can prevent the breadmaking ingredients from changing into the dough. More particularly, this mixing can prevent the breadmaking ingredients from increasing its viscosity and turning into the dough faster than desired and consequently can avoid the dough having decreased its viscosity when baked.

In the automatic breadmaking apparatus of the present invention, the stirrer may include a blade mounted on a bottom of the container and a rotating member for rotating the blade, and the central control section may cause the stirring control section to execute such a control that the number of revolutions of the blade per given time is smaller at mixing the breadmaking ingredients than at kneading the breadmaking ingredients.

With this constitution, it is possible to avoid the flying of powdery components contained in the breadmaking ingredients when mixed, and it is also possible to avoid with higher reliability the breadmaking ingredients raising their viscosity and changing into dough earlier than desired and avoid the dough having decreased its viscosity before baked.

In another aspect, the present invention provides a method of making bread comprising mixing breadmaking ingredients containing rice flour, subjecting the mixed breadmaking ingredients to a primary rise, kneading the breadmaking ingredients to form dough after the primary rise, fermenting the formed dough and baking the fermented dough.

With this constitution, the breadmaking ingredients are simply mixed without being kneaded at first so that the breadmaking ingredients do not change into the dough before the primary rise. Thereby it is possible to suppress the increase of the viscosity of the breadmaking ingredients at early stages and thereby prevent the reduction of the viscosity of the dough before baked. Further, in the case where bread is made from rice flour, which is harder to hydrate than wheat flour, the primary rise provides enough time for the rice flour to hydrate and the bread can be adequately baked.

A time required for mixing the breadmaking ingredients may be set shorter than a time required for kneading the breadmaking ingredients after the primary rise. Thereby the breadmaking ingredients containing the rice flour can maintain fluidity while mixed and change into dough which does not have fluidity while kneaded. Since this setting shortens the time from the change into the dough to the baking of the dough, it is possible to bake the dough before the rice flour in the dough releases moisture. Thus tasty bread can be baked.

The breadmaking ingredients may not contain wheat flour. Thereby it is possible to make bread that is safe to a person allergic to wheat.

The breadmaking ingredients may contain sugar, salt, oil, fat, dry yeast and/or skimmed milk powder in addition to the rice flour as the main ingredient. These ingredients help production of various kinds of bread meeting tastes of users.

The breadmaking ingredients may contain gluten. The gluten contained in the breadmaking ingredients allows production of as softly risen bread as that made from wheat flour.

The breadmaking ingredients may be free of gluten. According to the breadmaking method of the invention, even if gluten is not contained in the breadmaking ingredients, viscous dough can be obtained. The gluten-free breadmaking ingredients allow production of bread that is safe to a person allergic to wheat.

To sum up major effects of the invention, which have been mentioned above with regard to each feature of the invention, since the invention can carry out the sequence for baking bread using rice flour as the main ingredient, bread can be adequately baked by the automatic breadmaking apparatus even with use of rice flour as the main ingredient.

Also, according to the present invention, the breadmaking ingredients are baked after kneaded into dough without punching which might damage the dough. Thus, even with use of breadmaking ingredients containing rice flour but not containing gluten, it is possible to avoid the reduction of the viscosity of the dough due to damage thereto and ensure enough rising of the bread baked. Therefore, the bread can be adequately produced by the automatic breadmaking apparatus even with use of rice flour as the main ingredient.

Further, according to the present invention, because the breadmaking process as a whole can be simplified by saving a punching step after kneading, it is possible to shorten a required time up to completion of fermentation.

These and other objects of the present application will become more readily apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

Fig. 1 is a perspective view of an automatic breadmaking apparatus in accordance with an embodiment of the present invention;
Fig. 2 is a vertical sectional view of the automatic breadmaking apparatus of Fig. 1, as seen from the front, with a cooking container for breadmaking placed therein;
Fig. 3 is a vertical sectional view of the automatic breadmaking apparatus of Fig. 1, as seen from the front, with a cooking container for making rice cake placed therein;
Fig. 4 is a block diagram showing control in the automatic breadmaking apparatus of Fig. 1;
Fig. 5 is an enlarged sectional view of the automatic breadmaking apparatus of Fig. 1, showing the vicinity of a control display panel;
Fig. 6 is a plan view of the control display panel of the automatic breadmaking apparatus of Fig. 1;
Fig. 7 shows a state of the automatic breadmaking apparatus of Fig. 1 before the cooking container is locked to a water vessel of a boiler of the apparatus;
Fig. 8 shows a state of the automatic breadmaking apparatus of Fig. 1 after the cooking container is locked to the water vessel of the boiler of the apparatus;
Fig. 9 is a vertical sectional view taken along line A-A in Fig. 7;
Fig. 10 is a flowchart illustrating an operation of the automatic breadmaking apparatus of Fig. 1; and
Figs. 11A and 11B illustrate each step carried out in automatic breadmaking operations by the automatic breadmaking apparatus of Fig. 1.

### DETAILED DESCRIPTION OF THE PREFERRED EMBODIMENT

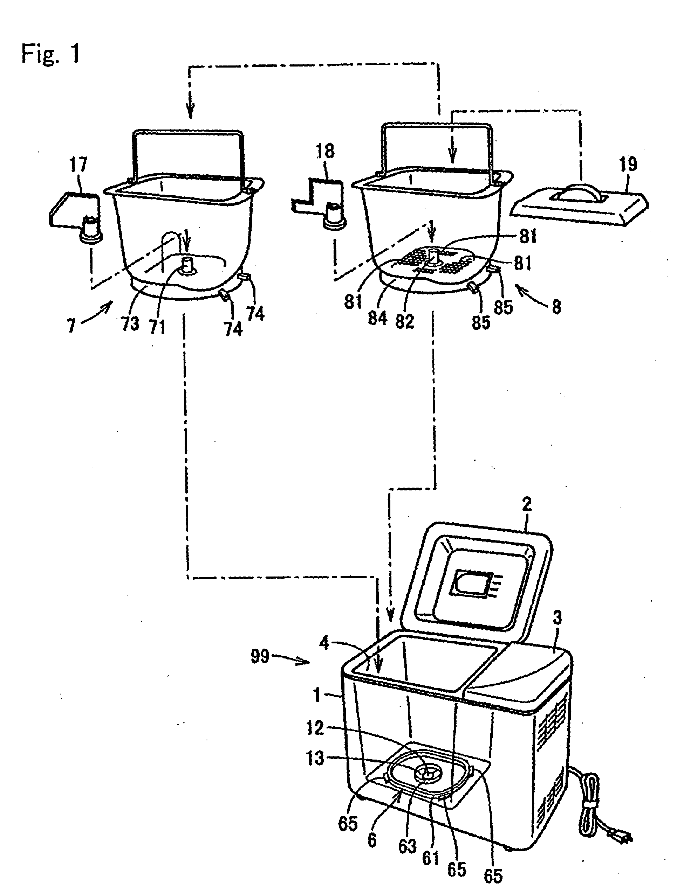

The present invention is now described in detail by way of example with reference to the attached drawings. Fig. 1 is a perspective view of an automatic breadmaking apparatus 99 as an embodiment of the present invention, showing an outer appearance thereof.

The automatic breadmaking apparatus 99 includes a housing 1, an open/close lid 2, a control display panel 3, a baking chamber 4, a baking heater 5, a boiler 6 as an example of a steam generator, two kinds of cooking containers 7, 8 called hoppers, a motor 9, a power transfer unit 10 and a control unit 11. Both the cooking containers 7, 8 are removably placed above the boiler 6 in the baking chamber 4. The cooking container 7 is used for breadmaking, and the cooking container 8 is used for making rice cake and for steam-cooking.

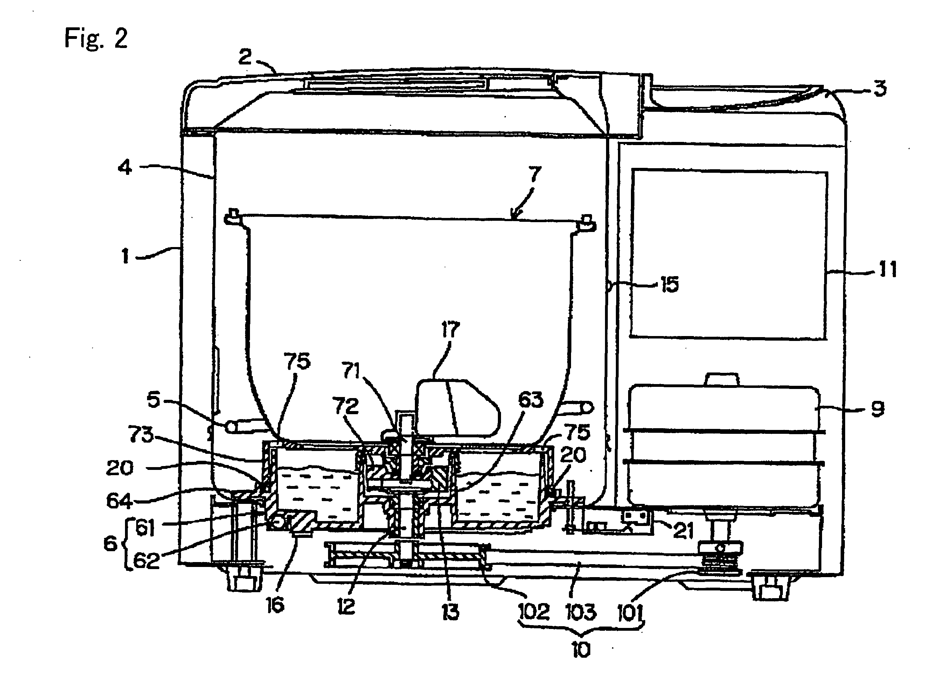

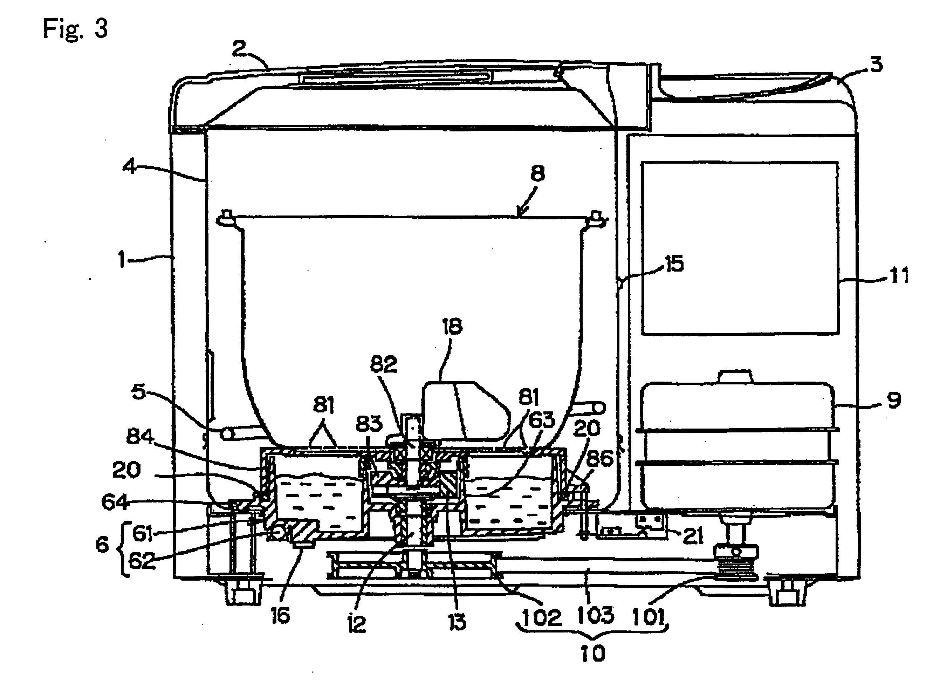

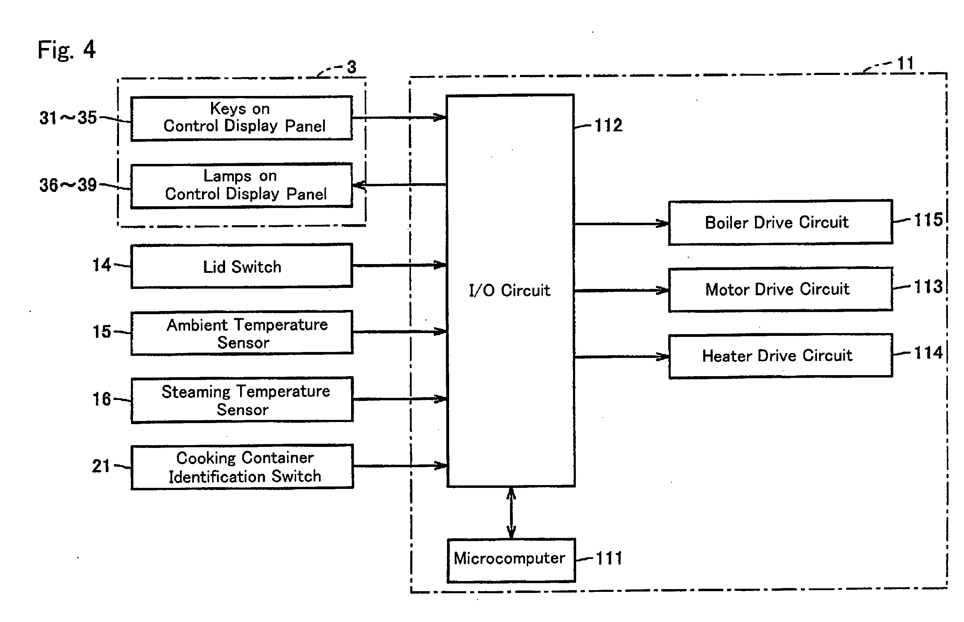

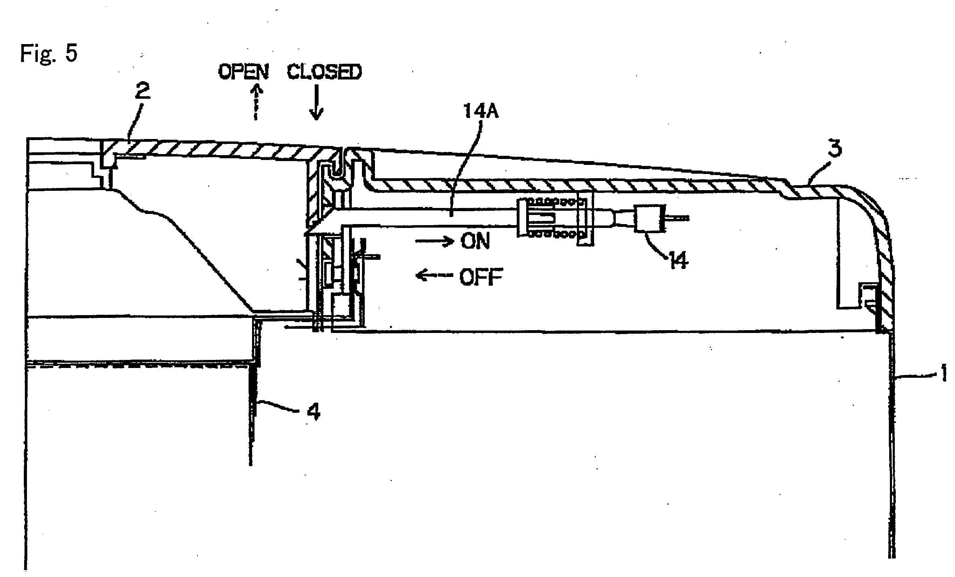

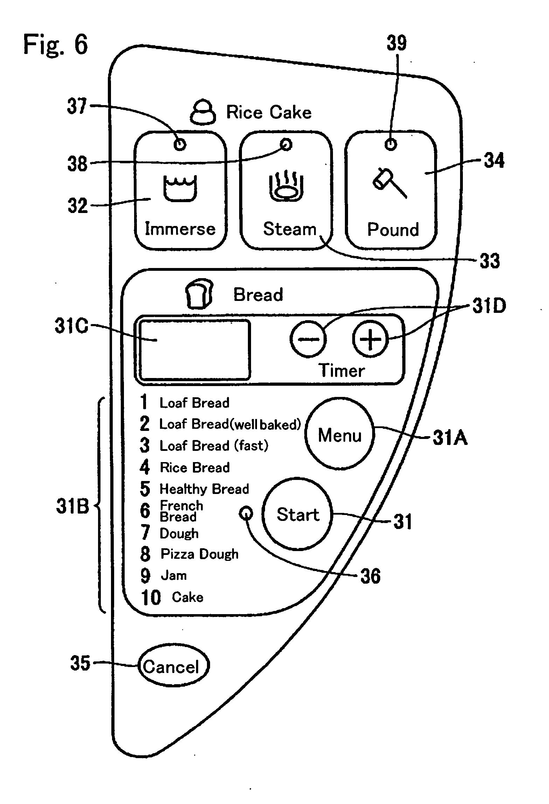

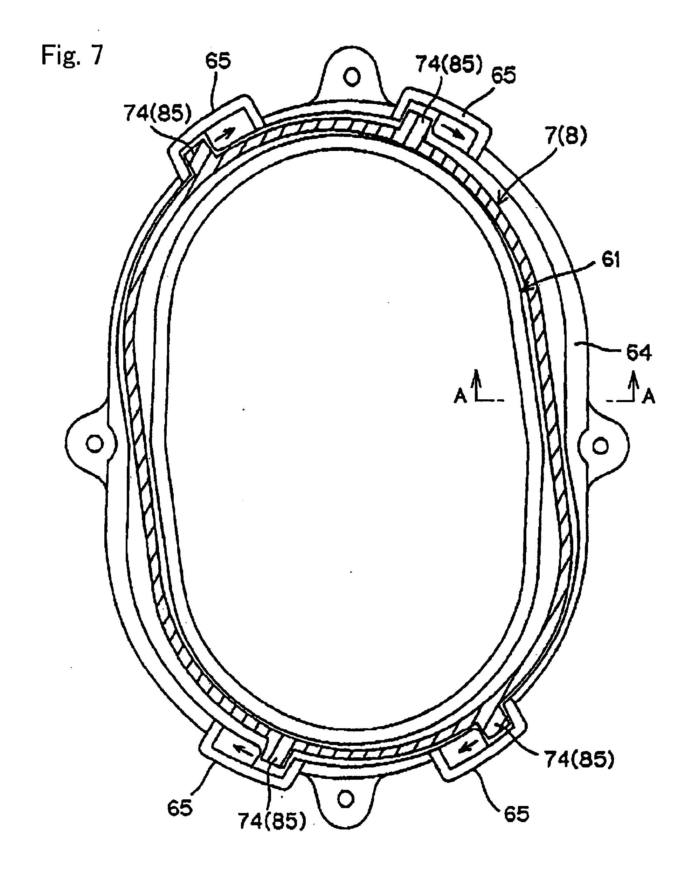

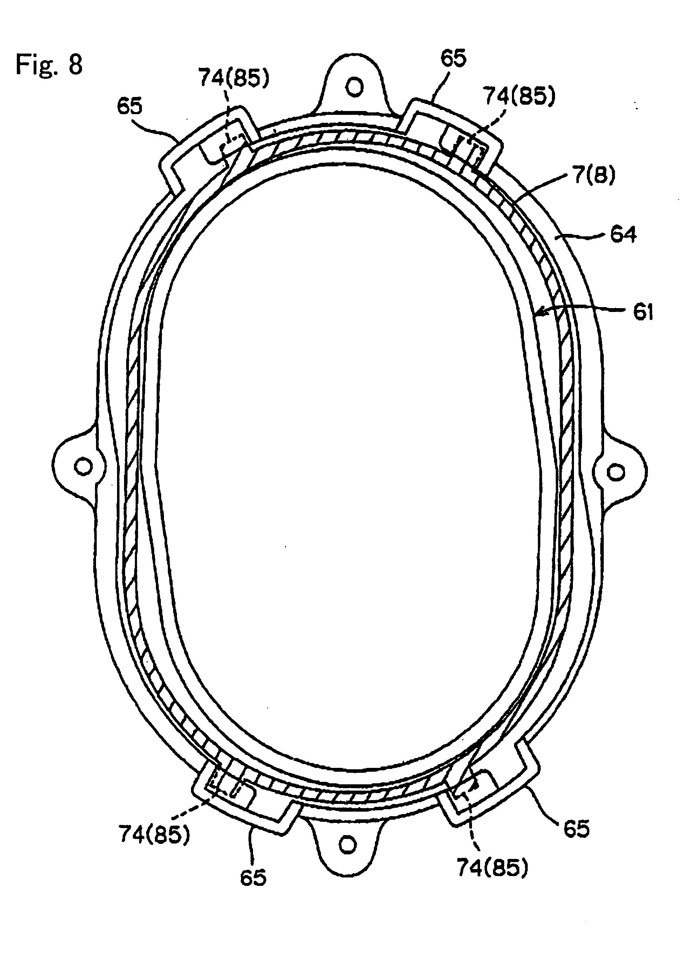

The automatic breadmaking apparatus 99 is now described in further detail with reference to Figs. 2 to 8. Fig. 2 is a vertical sectional view of the automatic breadmaking apparatus 99, as seen from the front, with the cooking container 7 for breadmaking placed therein. Fig. 3 is a vertical sectional view of the automatic breadmaking apparatus 99, as seen from the front, with the cooking container 8 for making rice cake placed therein. Fig. 4 is a control block diagram of the automatic breadmaking apparatus 99. Fig. 5 is an enlarged sectional view of the automatic breadmaking apparatus 99, showing the vicinity of the control display panel 3. Fig. 6 is a plan view of the control display panel 3. Fig. 7 shows a state before the cooking container 7 or 8 is locked to a water vessel of the boiler 6. Fig. 8 shows a state after the cooking container 7 or 8 is locked to the water vessel of the boiler 6.

The housing 1 is formed in an almost rectangular parallelepiped shape. On the top thereof, a top opening is formed in an area about two-thirds as long as the housing 1 in a longitudinal direction. The open/close lid 2 is attached to the top opening so that the open/close lid 2 can be upwardly opened. A lid switch 14 for detecting an opened and a closed state of the open/close lid 2 is mounted on the top opening of the housing 1. As shown in Fig. 5, the lid switch 14 includes a movable pin 14A, which is pressed to an ON-state when the open/close lid 2 is closed and is restored to an OFF-state when the open/closed lid 2 is opened.

The control display panel 3 is provided in the remaining one-third area of the top of the housing 1 and includes various keys and lamps. The keys on the control display panel 3 are, for example, a start key 31 for starting an automatic breadmaking operation, an immersing key 32 for immersing glutinous rice in water, a steaming key 33 for steaming the glutinous rice, a pounding key 34 for pounding the steamed glutinous rice, a cancel key 35 and the like. The lamps on the control display panel 3 are, for example, a breadmaking operation lamp 36 which turns on/off in response to an ON/OFF operation of the start key 31, an immersing operation lamp 37 which turns on/off in response to an ON/OFF operation of the immersing key 32, a steaming operation lamp 38 which turns on/off in response to an ON/OFF operation of the steaming key 33, a pounding operation lamp 39 which turns on/off in response to an ON/OFF operation of the pounding key 34 and the like. The control display panel 3 also includes a menu key 31A for selecting the kind of bread to be made, a menu display section 31B indicating the kinds of bread to be selected, a display section 31C for displaying a menu number selected by the menu key 31A and a preset time set on a timer, a setting button 31D for setting the timer for the preset time and the like. The kinds of bread displayed by the menu display section 31B include "loaf of bread" to be made with use of wheat flour as the main ingredient and "rice bread" to be made with use of rice flour instead of wheat flour as an ingredient.

The baking chamber 4 forms an atmosphere for baking the dough and is provided in an region within the housing 1 which region corresponds to the top opening. An ambient temperature sensor 15 for detecting the temperature of the atmosphere within the baking chamber 4 is mounted on a peripheral wall of the baking chamber 4.

The baking heater 5 regulates the temperature of the atmosphere within the baking chamber 4 and is mounted on an inner peripheral wall of the baking chamber 4 near the bottom thereof.

The boiler 6 includes a water vessel 61 and a boiler heater 62. The water vessel 61 is placed at the bottom of the baking chamber 4, is formed in a substantially elliptic shape as seen in plan view and has an opening on the top. The boiler heater 62 is mounted on an outer periphery at the bottom of the water vessel 61 and evaporates water in the water vessel 61. A cylindrical wall 63 is provided in a central region of the water vessel 61. A spindle 12 is rotatably passed in a vertical direction through a horizontal wall provided at a vertically midpoint position of the cylindrical wall 63. A drive gear 13 is fixed at a projecting upper end of the spindle 12. A steaming temperature sensor 16 for detecting a steaming temperature is mounted on an outside bottom face of the water vessel 61 of the boiler 6.

The motor 9 rotates the spindle 12 mounted to the boiler 6 by the power transfer unit 10. The motor 9 is provided in a region below the control display panel 3 within the housing 1.

The power transfer unit 10 is mounted on an inside bottom of the housing 1 and transfers rotating power of the motor 9 to the spindle 12. The power transfer unit 10 is composed of a pulley 101 fixed to an output axis of the motor 9, a pulley 102 attached to a lower end of the spindle 12 and an endless belt 103 looped over the pulleys 101 and 102.

The control unit 11 controls breadmaking and rice cake making operations and is provided in a region between the control display panel 3 and the motor 9 within the housing 1. The control unit 11 includes a microcomputer 111 composed of a CPU (central processing unit), a ROM (read only memory) and a RAM (random access memory), an I/O (input/ output) circuit 112, a motor drive circuit 113, a heater drive circuit 114 and a boiler drive circuit 115. The microcomputer 111 corresponds to a central control section.

The construction of the cooking containers 7, 8 is now described in detail. The cooking container 8 for making rice cake is provided with a plurality of through-holes 81 for introducing steam at the bottom thereof, while the cooking container 7 for breadmaking is not provided with such through-holes at the bottom thereof. That is a main difference between the cooking containers 7 and 8. As shown in Fig. 1, the cooking container 8 for making rice cake has a close lid 19, as an attachment, which can be attached to and detached from a top opening of the cooking container 8. The close lid 19 is used for steam-cooking.

The cooking containers 7 and 8 are formed in a shape corresponding to bread of one-and-half loaf size, i.e., in a rectangular parallelepiped shape. The cooking container 8 for making rice cake has outside dimensions a size smaller than inside dimensions of the cooking container 7 for breadmaking. Thus the cooking container 8 can be put in the cooking container 7 in storage.

Rotation shafts 71 and 82 are provided at the center of the bottom of the cooking containers 7 and 8. The rotation shafts 71 and 82 pass through the bottom. Stirring blades 17 and 18 for kneading the breadmaking ingredients or rice cake ingredients can be attached to and detached from projecting upper ends of the rotation shafts 71 and 82, and follower gears 72 and 83 which engage with the drive gear 13 of the spindle 12 are mounted to lower projecting ends of the rotation shafts 71 and 82.

Bases 73 and 84 for fixing the cooking containers 7 and 8 to the water vessel 61 of the boiler 6 are mounded on an outside bottom of the cooking containers 7 and 8. The bases 73 and 84 are formed in such a shape that they cover the water vessel 61 of the boiler 6 and serve as a lid for sealing the water vessel 61.

As shown in Figs. 7 and 8, for immovable fixation of the cooking containers 7 and 8 to the boiler 6 within the baking chamber 4, engagement pawls 74 and 85 are mounded on outside faces at both longitudinal ends of the bases 73 and 84 of the cooking containers 7 and 8 (two pawls at each end, four in total), and engagement portions 65 which engage with the engagement pawls 74 and 85 are formed at both longitudinal ends on the top face of a base 64 of the water vessel 61 of the boiler 6. For fixing the cooking container 7 or 8 to the boiler 6, the base 73 or 84 of the cooking container 7 or 8 is placed over the water vessel 61 of the boiler 6, and in this state, the engagement pawls 74 or 85 are engaged with the engagement portions 65. Then the cooking container 7 or 8 is turned in a predetermined direction, for example, clockwise in Fig. 8, so that the engagement pawls 74 or 85 are locked to the engagement portions 65. In order to allow this locking operation, the outer shape of the bases 73 and 84 is larger than that of the water vessel 61. In order that the water vessel 61 of the boiler 6 is sealed with the bases 73 and 84 of the cooking containers 7 and 8, the bottom of peripheral walls of the bases 73 and 84 are contacted by pressing to a packing 20 mounted on the outer periphery of the base 64 of water vessel 61.

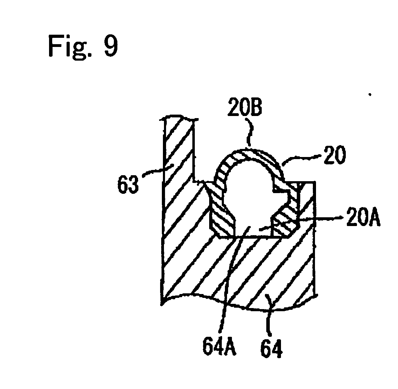

Fig. 9 is a vertical sectional view taken along line A-A in Fig. 7. Fig. 9 corresponds to a sectional view of the packing 20.

The packing 20 is formed of a soft rubber in a shape of almost reverse U as seen in cross section, and the packing 20 is hollow. The packing 20 is attached to the base 64 with a lower opening 20A of the packing 20 fitted in a groove 64A formed in the outer periphery of the base 64. When the base 73 or 84 is placed over the water vessel 61, the lower end of the peripheral walls of the base 73 or 84 is contacted by pressing with the top 20B of the packing 20. Since the packing 20 is hollow, the packing 20 can readily change its form to fit to the shape of the lower end of the peripheral walls of the base 73 or 84 and consequently a close contact can be obtained. Thus steam can be effectively prevented from leaking out of the water vessel 61, and steam generated in the water vessel 61 can all be supplied into the cooking container 8 without waste. Therefore, glutinous rice and the like can be effectively steamed.

As shown in Fig. 2, the cooking container 7 for breadmaking includes a steam bypass hole 75 in the base 73 thereof. Unlike the cooking container 8 for making rice cake, the cooking container 7 does not have the steam introduction holes 81 on the bottom. If the cooking container 7 is mistakenly used for making rice cake, an internal pressure will rise owing to steam generated from the boiler 6. The steam bypass hole 75 prevents this rise in the internal pressure.

The cooking container 8 for making rice cake includes an identification member 86 on a peripheral wall of the base 84 thereof as shown in Fig. 3, while the cooking container 7 for breadmaking does not include such an identification member. In this connection, a cooking container identification switch 21 is mounted on the bottom of the baking chamber 4. The cooking container identification switch 21 is activated by the identification member 86 of the cooking container 8.

The stirring blades 17, 18 are formed in shapes allowing for the kneadability of ingredients. More particularly, the stirring blade 17 is a kneading blade for breadmaking and has a shape suitable for kneading breadmaking ingredients and dough. On the other hand, the stirring blade 18 is a pounding blade for rice cake pounding and has a shape suitable for pounding rice cake material. In order to avoid mis-attachment of the stirring blades 17 and 18 different in shape to the cooking containers, attachment holes of the stirring blades 17 and 18 have different shapes in cross section and upper portions of the rotation shafts 71 and 82 of the cooking containers 7 and 8 have different shapes, the attachment holes of the stirring blades 17 and 18 corresponding to the rotation shafts 71 and 82, respectively.

Referring to Fig. 4, in the automatic breadmaking apparatus 99, the control unit 11 receives various kinds of information from the control display panel 3, the lid switch 14, the ambient temperature sensor 15, the steaming temperature sensor 16 and the cooking container identification switch 21. The control unit 11 includes the boiler drive circuit 115 for controlling the operation of the boiler 6, the motor drive circuit 113 for controlling the operation of the motor 9, the heater drive circuit 114 for controlling the operation of the baking heater 5, the microcomputer 111 for controlling the operation of the motor drive circuit 113, the heater drive circuit 114 and the boiler drive circuit 115 based on input information and the I/O circuit 112 for controlling input and output of information in the control unit 11. The microcomputer 111, in response to information input to the control unit 11, controls the operation of the motor drive circuit 113, the heater drive circuit 114 and the boiler drive circuit 115 and also controls indications displayed by various lamps such as the breadmaking operation lamp 36 on the control display panel 3.

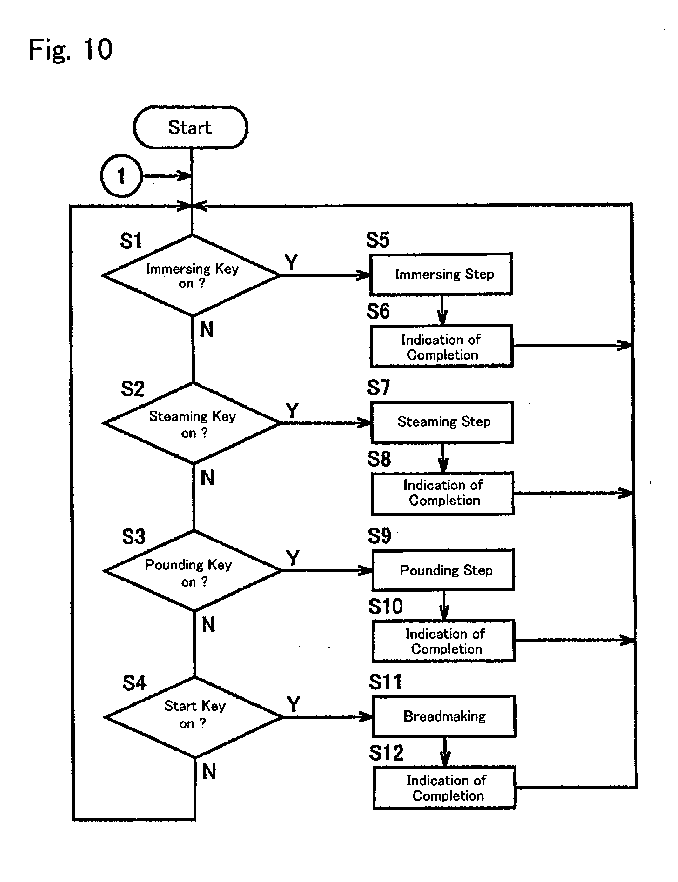

The operation of the automatic breadmaking apparatus 99 based on the control of the microcomputer 111 is now described by use of the flowchart of Fig. 10 illustrating contents of the control of the microcomputer 111.

When power is tuned on, the operation waits for any one of the start key 31, the immersing key 32, the steaming key 33 and the pounding key 34 of the control display panel 3 to be activated by a user in Steps S1 to S4.

The user needs to press the start key 31 for breadmaking and press the immersing key 32, the steaming key 33 and the pounding key 34 sequentially at the end of each step for making rice cake. If bread is to be made, the cooking container 7 for breadmaking is required to be placed in the baking chamber 4, and if rice cake is to be made, the cooking container 8 for making rice cake is required to be placed in the baking chamber 4.

When the immersing key 32 is activated, an immersing step is carried out in Step S5 in which glutinous rice is immersed for a necessary period so that the glutinous rice contains enough water. For preparation for this step, the user needs to wash the glutinous rice and put the glutinous rice in a container such as the cooking container 7 for breadmaking with a required amount of water. The immersing step is carried out for the glutinous rice to contain water prior to a steaming step in Step S7.

When the immersing step completes, the completion of the immersing step is indicated in Step S6, and the operation waits for the user to press a key.

When the steaming key 33 is activated, the steaming step is carried out in Step S7 in which the boiler 6 is driven, thereby steaming the glutinous rice having contained water in the above-mentioned immersing step. For preparation for this step, the user needs to put the glutinous rice having contained water in the cooking container 8 for making rice cake and also put a required amount of water in the water vessel 61 of the boiler 6.

When the steaming step completes, the completion of the steaming step is indicated in Step S8, and the operation waits for the user to press a key.

When the pounding key 34 is activated, a pounding step is carried out in Step S9 in which the stirring blade 18 of the cooking container 8 is rotated by the motor 9 and the power transfer unit 10 to knead and pound the steamed glutinous rice in the cooking container 8.

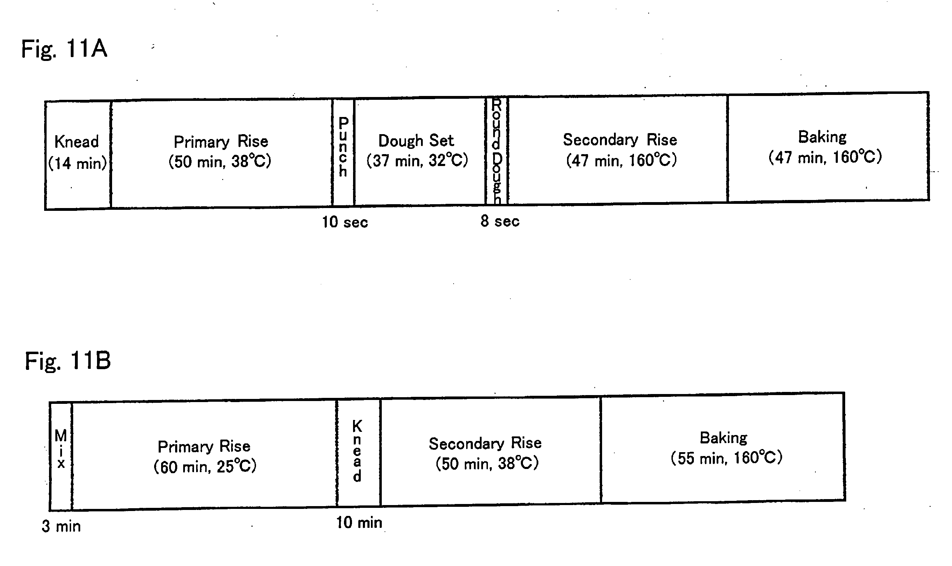

When the start key 31 is activated, an automatic operation of making bread is carried out in Step S11. For preparation for this step, the user needs to feed breadmaking ingredients (flour, water, yeast, etc.) in the cooking container 7 for breadmaking, select a desired menu and set a timer for a desired finish time. The automatic breadmaking apparatus 99 of this embodiment carries out different operations in the case where wheat flour is mainly used for the dough (for example, "loaf of bread" is selected from the kinds of bread in the menu display section 31B) and in the case where the rice flour is mainly used for the dough instead of wheat flour (for example, "rice bread" is selected from the kinds of bread in the menu display section 31B). In the former case, as shown in Fig. 11A, a kneading step, a primary rise step, a punching step, a dough setting step, a dough rounding step, a secondary rise step of fermenting the rounded dough, a baking step and a keep-warm step (not shown) are sequentially carried out in this order.

In the kneading step, the breadmaking ingredients are kneaded by turning the motor 9 on and off at preset intervals for four minutes and then continuously driving the motor 9 for ten minutes to rotate the stirring blade 17. Thus the number of revolutions of the stirring blade 17 per unit time is suppressed by turning the motor 9 on and off for the starting four minutes of kneading for the purpose of avoiding the flying of powdery components contained in the breadmaking ingredients. The kneaded breadmaking ingredients turn into a dough state.

In the primary rise step, the ambient temperature within the baking chamber 4 is maintained at 32°C by the baking heater 5, and the dough is allowed to stand for 52 minutes. During the primary rise, the fermentation of the dough progresses, and the dough rises owing to gas enclosed in the dough.

In the punching step, the dough is punched for degasification by the stirring blade 17 rotated by continuous drive of the motor 9 for ten seconds. By this punching step, large accumulations of gas (gas bubbles) in the dough are eliminated, so that the dough becomes uniform.

In the dough setting step, the ambient temperature within the baking chamber 4 is maintained at 32°C by the baking heater 5, and the dough is allowed to stand for 37 minutes. By this step, the dough damaged by punching is laid to rest and uniformly rises.

In the dough rounding step, the dough is rounded by the stirring blade 17 rotated by continuous driving the motor 9 for eight seconds. Thereby the dough is well formed before baked.

In the secondary rise step, the ambient temperature within the baking chamber 4 is raised and maintained at 38°C by the baking heater 5, and the dough is allowed to stand for an appropriate time (30 to 70 minutes, for example, 60 minutes). Thereby the dough is more vividly fermented and rises sufficiently.

In the baking step, the ambient temperature within the baking chamber 4 is raised and maintained at 160°C by the baking heater 5, and the dough is allowed to stand for 47 minutes.

In the keep-warm step, the ambient temperature within the baking chamber 4 is slowly decreased from the previous baking temperature to 80°C. In this step, the baking heater 5 is controlled to turn on and off within a time period of 60 minutes at longest.

In the latter case (where the rice flour is used in place of wheat flour), as shown in Fig. 11B, a mixing step, a primary rise step, a kneading step, a secondary rise step, a baking step and a keep-warm step (not shown) are sequentially carried out in this order by an automatic breadmaking operation.

In the mixing step, the motor 9 is driven for three minutes to rotate the stirring blade 17 in order to mix the breadmaking ingredients. In the mixing step, the motor is turned on and off at particular intervals. Thereby the stirring blade 17 is rotated intermittently, and consequently, the number of revolutions of the stirring blade 17 per unit time decreases as compared with the case where the stirring blade is rotated continuously.

In the present specification, the term "kneading" means rotating the stirring blade 17 so that the breadmaking ingredients obtain the best viscosity for being baked. On the other hand, the term "mixing" means rotating the stirring blade 17 to mix the breadmaking ingredients for a short time so that the rice flour in the breadmaking ingredients is promoted to hydrate but the viscosity of the breadmaking ingredients does not rise. In the present invention, the breadmaking ingredients are referred to as "dough" after they are kneaded and lose their fluidity, but the breadmaking ingredients that are simply mixed and do not lose their fluidity are referred to as "breadmaking ingredients."

In the primary rise step, the ambient temperature within the baking chamber 4 is maintained at 25°C by the baking heater 5, and the breadmaking ingredients are allowed to stand for 60 minutes. In the primary rise in Fig. 11A, the breadmaking ingredients in the cooking container 7 turn almost into the dough, while in the primary rise in Fig. 11B, the breadmaking ingredients in cooking container 7 remain breadmaking ingredients.

In the kneading step, the motor 9 is continuously driven for ten minutes to rotate the stirring blade 17 in order to knead the breadmaking ingredients. At the start of kneading in Fig. 11A, the motor 9 is intermittently driven, while in the kneading step in Fig. 11B, such intermittent driving is not performed because it is considered that the powdery components of the breadmaking ingredients are already unlikely to fly by kneading.

In the secondary rise step, the ambient temperature within the baking chamber 4 is raised and maintained at 38°C by the baking heater 5, and the dough is allowed to stand for an appropriate time period (30 to 70 minutes, for example, 50 minutes).

In the baking step, the ambient temperature within the baking chamber 4 is raised and maintained at 160°C by the baking heater 5, and the dough is allowed to stand for 55 minutes.

In the keep-warm step, the ambient temperature within the baking chamber 4 is slowly decreased from the previous baking temperature to 80°C. In this step, the baking heater 5 is controlled to turn on and off within a time period of 60 minutes at longest.

According to the sequence of Fig. 11B, the time until the completion of fermentation is shortened by nearly 30 minutes as compared with the sequence of Fig. 11A. Therefore, the fermentation can be finished before the rice flour releases moisture, and consequently, delicious bread can be made. Moreover, the bread can be made in a reduced time. Breadmaking becomes quicker and easier.

In the embodiment described above, the automatic breadmaking apparatus 99 provides excellent usability because it can be used for breadmaking, rice cake making and steam-cooking. Furthermore, regarding breadmaking, the automatic breadmaking apparatus 99 carries out different sequences for the breadmaking ingredients mainly containing wheat flour and for those mainly containing rice flour.

The breadmaking ingredients usable with the automatic breadmaking apparatus 99 may not contain wheat flour, may contain both wheat and rice flour and may contain rice flour, sugar, salt, fat, oil, dried yeast and/or skimmed milk powder. The breadmaking ingredients containing rice flour may contain gluten, may not contain gluten, and may contain a plurality of kinds of rice flour.

In the sequence of Fig. 11B, the stirring blade 17 is rotated in the mixing step and in the kneading step. The breadmaking ingredients are considered to have a lower viscosity in the mixing step than in the kneading step. For this reason, the number of revolutions of the stirring blade 17 (per unit time) is preferably smaller in the mixing step than in the kneading step. The number of revolutions of the stirring blade 17 is reduced in the mixing step as compared with that in the kneading step also because the powdery components of the breadmaking ingredients are more likely to fly in the mixing step than in the kneading step. The reduction of the number of revolutions of the stirring blade 17 is intended for ensuring that the powdery components are prevented from flying.

Also in the sequence of Fig. 11B, the breadmaking ingredients are stirred by the stirring blade 17 at a smaller number of revolutions for a shorter time in the mixing step than in the kneading step. That is for ensuring that the breadmaking ingredients containing rice flour instead of wheat flour first turn into the dough not in the mixing step but in the kneading step. If that is ensured, in the mixing step, the breadmaking ingredients may be stirred at the same number of revolutions but for a shorter time as compared with the kneading step or may be stirred at a reduced number of revolutions but for the same time period as compared with the kneading step.

The above-described embodiment should be construed as an example for the illustration purpose alone and should not be considered to limit the scope of the present invention. The scope of the invention is defined by the claims but not by the above explanation, and various changes and modifications will be included within the spirit and scope of the invention.

The present invention can be utilized for producing breadmaking apparatuses for baking delicious and softly risen bread with use of rice flour.

## Claims

1. An automatic breadmaking apparatus adapted to automatically carry out breadmaking operations from kneading to baking, the automatic breadmaking apparatus comprising:
a housing;
a container receivable in the housing into which breadmaking ingredients are fed;
a stirrer for stirring the breadmaking ingredients fed in the container;
a stirring control section for controlling an operation of the stirrer;
a temperature control section for controlling temperature in the container; and
a central control section for controlling the stirring control section and the temperature control section in accordance with a breadmaking sequence using rice flour.

2. An automatic breadmaking apparatus adapted to automatically carry out breadmaking operations from kneading to baking, the automatic breadmaking apparatus comprising:
a housing;
a container receivable in the housing into which breadmaking ingredients are fed;
a stirrer for stirring the breadmaking ingredients fed in the container;
a stirring control section for controlling an operation of the stirrer;
a temperature control section for controlling temperature in the container; and
a central control section for controlling the stirring control section and the temperature control section, thereby forming dough by kneading the breadmaking ingredients, fermenting the formed dough and baking the fermented dough, sequentially in the container.

3. The automatic breadmaking apparatus according to claim 2, wherein the central control section controls the stirring control section and the temperature control section, thereby causing a primary rise of the breadmaking ingredients in the container before forming the dough by kneading.

4. The automatic breadmaking apparatus according to claim 3, wherein the central control section controls the stirring control section, thereby causing the breadmaking ingredients to be mixed before the primary rise.

5. The automatic breadmaking apparatus according to claim 4, wherein the stirrer includes a blade mounted on a bottom of the container and a rotating member for rotating the blade, and the central control section causes the stirring control section to execute such a control that the number of revolutions of the blade per given time is smaller at mixing the breadmaking ingredients than at kneading the breadmaking ingredients.

6. A method of making bread comprising:
mixing breadmaking ingredients containing rice flour;
subjecting the mixed breadmaking ingredients to a primary rise;
kneading the breadmaking ingredients to form dough after the primary rise;
fermenting the formed dough; and
baking the fermented dough.

7. The method of making bread according to claim 6, wherein a time required for mixing the breadmaking ingredients is set shorter than a time required for kneading the breadmaking ingredients after the primary rise.

8. The method of making bread according to claim 6, wherein the breadmaking ingredients do not contain wheat flour.

9. The method of making bread according to claim 6, wherein the breadmaking ingredients contain sugar, salt, oil, fat, dried yeast and/or skimmed milk in addition to the rice flour.

10. The method of making bread according to any one of claims 6 to 9, wherein the breadmaking ingredients contain gluten.

11. The method of making bread according to any one of claims 6 to 9, wherein the breadmaking ingredients do not contain gluten.
